# EUROPÄISCHE PATENTSCHRIFT

(11) **EP 2 238 365 B1**
(45) Veröffentlichungstag und Bekanntmachung des Hinweises auf die Patenterteilung: **11.05.2011**
(21) Anmeldenummer: 08871937.2
(22) Anmeldetag: 10.11.2008
(51) Int. Cl.: F16D 13/34, F16H 23/04, F16H 63/30

(54) **SCHALTEINRICHTUNG EINES GANGRÄDERWECHSELGETRIEBES**
SHIFTING DEVICE OF A GEAR WHEEL VARIABLE-SPEED TRANSMISSION
DISPOSITIF DE CHANGEMENT DE VITESSE D'UNE BOÎTE DE VITESSES

(30) Priorität: 30.01.2008 DE 102008006843
(43) Veröffentlichungstag der Anmeldung: 13.10.2010
(73) Patentinhaber: Schaeffler Technologies GmbH & Co. KG, 91074 Herzogenaurach (DE)
(72) Erfinder: KRÄMER, Klaus, 91460 Baudenbach (DE); SCHWARZ, Uwe, 91052 Erlangen (DE); KOHTES, Pascal, 90491 Nürnberg (DE); KOHN, Peter, 91074 Herzogenaurach (DE); MANDON, Valerie, 90587 Obermichelbach (DE)
(86) Internationale Anmeldenummer: PCT/EP2008/065243
(87) Internationale Veröffentlichungsnummer: WO 2009/095102

(56) Entgegenhaltungen:
- WO-A-2007/128929
- DE-A1- 2 510 657
- DE-U- 1 927 016
- DE-U1- 20 217 216

## Beschreibung

### Gebiet der Erfindung

Die Erfindung betrifft eine Schalteinrichtung eines Gangräderwechselgetriebes mit einem Schaltelement, das durch eine Schaltbetätigungseinheit axial zu einer Getriebewelle verschiebbar ist, und mit einer Synchronisiereinrichtung, die zwischen dem Schaltelement und einem auf der Getriebewelle gelagerten Losrad angeordnet ist.

### Hintergrund der Erfindung

Schalteinrichtungen für Zahnräderwechselgetriebe weisen häufig eine Schaltbetätigungseinheit in Form einer Schaltgabel auf, welche mit einer Schaltstange bzw. einer Schaltwelle verbunden ist. Die Schaltgabel greift formschlüssig in eine Schiebemuffe einer Synchronisiereinrichtung, wobei über Kuppelelemente Losräder mit der Vorgelege- oder der Getriebehauptwelle kuppelbar sind. Viele der in derartigen Schalteinrichtungen eingesetzten Schaltgabeln sind drehstarr mit der Schaltstange verbunden. Alternativ dazu kann eine als Schaltschwinge gestaltete Schaltgabel axial verschiebbar oder verdrehbar zu der Schaltstange angeordnet werden. Die Betätigung der Schaltgabel erfolgt häufig mittels eines Schaltfingers, der formschlüssig in ein mit der Schaltgabel verbundenes Schaltmaul eingreift und eine Verschiebung der Schaltgabel ermöglicht. Die geschalteten Gänge und die Neutralstellung werden mittels einer Schaltarretierung gehalten, welche die Positionen der Schaltgabel durch ein Zusammenwirken mit einem meist an der Schaltstange angeordneten Rastgebirge fixiert.

### Stand der Technik

Die Automatisierung von Schaltgetrieben ermöglicht es, neuartige Schaltkonzepte zu realisieren. Eine derartige Synchronisiereinrichtung, die auf eine Schiebemuffe verzichtet, ist beispielsweise in WO 2007/128929 A1 veröffentlicht. Vorgestellt wird eine ringförmige Schaltgabel, die innenseitig ein als Kugellager ausgebildetes Lager aufweist, während sie außenseitig mit einer Schaltwelle verbunden ist. Bei einer derartigen Anordnung wird die Synchronisationskupplung nicht nur zum Synchronisieren genutzt, sondern auch zum dauerhaften Koppeln der Gangräder, sofern der entsprechende Gang geschaltet ist. Diese Art der Schalteinrichtung eignet sich daher besonders für automatisierte Schaltgetriebe, bei denen die Schaltgabel durch einen Aktuator betätigt wird.

Das Kugellager ist in die Schaltgabel eingepresst, weswegen eine genaue Koaxialität des Lagers zur Getriebewelle beim Einbau erforderlich ist. Die Schaltwelle und die Getriebewelle müssen daher sehr exakt zueinander ausgerichtet sein. Neben der aufwändigen Montage kann diese Einheit bei nichtzentrischer Krafteinleitung verklemmen, oder es erfolgt ein unerwünschtes Ansynchronisieren. Ferner können sich dadurch Geräusche entwickeln.

### Aufgabe der Erfindung

Die Aufgabe der Erfindung ist es daher eine Schalteinrichtung zu schaffen, bei der die vorstehend genannten Nachteile beseitigt sind.

Die Aufgabe ist nach dem kennzeichnenden Teil des Oberbegriffs des Anspruchs 1 dadurch gelöst, dass zwischen dem Schaltelement und der Synchronisiereinrichtung ein Axiallager angeordnet ist. Unter dem Begriff Synchronisiereinrichtung sollen dabei jegliche Mittel verstanden werden, die geeignet sind, eine Drehzahlangleichung zwischen dem zu schaltenden Losrad und der Getriebewelle zu bewirken, wobei die Betätigungsvorrichtung, z.B. eine Schiebemuffe, davon ausgenommen ist. Derartige Mittel sind beispielsweise ein Synchronringpaket mit einem Innenring, einem Zwischenring und einem Außenring oder ein einzelner Synchronring, wobei wahlweise ein am Losrad Kupplungskörper vorgesehen ist.

Bei längerer Belastungsdauer entsteht Reibwärme, die in Schalteinrichtungen des Standes der Technik zu Ausfällen führen kann, da die Gleitschuhe, welche meist aus Kunststoff bestehen, der Belastung nicht standhalten. Durch die Anordnung des Axiallagers wird eine derartige Überlastung vermieden, da das Axiallager die Relativbewegung aufnimmt.

Das Axiallager weist in bekannter Weise einen Lagerring auf, der seitlich durch zwei Laufflächen eingefasst ist. Eine Lauffläche kann beispielsweise durch eine Druckscheibe gebildet sein. Wird ein Gang geschaltet, so wird eine axiale Kraft auf die Druckscheibe ausgeübt, so dass eine axiale Verschiebung der Synchronisiereinrichtung auf der Getriebewelle erfolgt. In einer Ausführung der Erfindung wirkt das Axiallager auf die Stirnseite eines Außenrings, der über einen Zwischenring mit einem Innenring kuppelbar ist, wobei der Innenring losradseitig angeordnet ist. Eine derartige Synchronisiereinrichtung kann in bekannter Weise eine Sperrverzahnung aufweisen, die ein Einkuppeln des Ganges verhindert, solange zwischen dem Losrad und der Getriebewelle eine Drehzahldifferenz besteht. Die Synchronringe weisen Reibbeläge auf, so dass beim Synchronisierprozess, der durch axiales Verschieben erfolgt, ein Reibschluss entsteht. Nach dem Synchronisieren werden die Synchronringe formschlüssig mit dem Losrad verbunden.

Der Lagerring kann aus einem Käfig bestehen, der Taschen aufweist, in welchen Wälzkörper geführt sind. Besonders geeignet ist die Verwendung von Nadeln bzw. Zylindern als Wälzkörper. Alternativ dazu ist ein käfigloses Lager vorgesehen.

In einer Variante ist der Lagerring axial beidseitig durch Druckscheiben eingefasst. Besonders vorteilhaft ist es bei allen vorstehend genannten Varianten, das Axiallager vorzuspannen.

Bei einer derartigen Synchronisiereinrichtung kann eine Schiebemuffe entfallen. Die Schaltbetätigungseinheit kann direkt mit dem Schaltelement, das die Axialverschiebung vornimmt, zusammenwirken, da es bezüglich der Schaltbetätigungseinheit drehfest angeordnet werden kann, weil die Rotationsbewegung durch das Axiallager aufgenommen wird. Dadurch sind die Enden der Schaltgabel, welche mit der Synchronisiereinrichtung zusammenwirken, sehr viel weniger belastet. Dies ermöglicht neue konstruktive Gestaltungen für die Schaltgabel. Sie kann dadurch leichter werden und axial schmaler bauen als herkömmliche Schaltgabeln. Ferner sind Gleitbeschichtungen entbehrlich, was ihre Herstellung vereinfacht. In einer Variante der Erfindung ist auch eine einteilige Ausbildung des Schaltbetätigungselements und des Schaltelements vorgesehen.

In einer Weiterbildung der Erfindung ist das Schaltelement ein Teil des Axiallagers und bildet eine Druckscheibe. Dadurch ist es möglich, mit besonders wenig Bauteilen eine besonders kurz bauende Schalteinrichtung zu erhalten. Alle Einzelteile sind sehr gut in der Massenproduktion herstellbar.

Die Schaltbetätigungseinheit kann als lediglich axial verschiebbare Schaltgabel ausgebildet sein, oder als verschwenkbare Schaltschwinge. In beiden Fällen ist sie in Kaltumformtechnik spanlos herstellbar, was insbesondere für große Stückzahlen von Vorteil ist. Sie kann einteilig mit dem Schaltelement ausgebildet sein, sodass sie einen ringförmigen Grundkörper aufweist. Alternativ dazu ist die Schaltbetätigungseinheit zweiteilig ausgebildet, so dass das Schaltelement separat gefertigt wird. Besonders geeignet ist eine Ausbildungsform ist eine Schaltbetätigungseinheit mit einem U-förmigen Gabelgrundkörper.

In einer weiteren Variante ist der Grundkörper der Schaltbetätigungseinheit dem Schaltelement derartig angepasst, dass das Schaltelement umfangsseitig auf seiner gesamten Länge formschlüssig umgriffen wird. Dies gewährleistet eine besonders sichere Führung.

Die Schaltbetätigungseinheit kann als Anbindung zur Schaltwelle eine (optional verschiebbare) Nabe aufweisen, über die die Ausrichtung der Schaltbetätigungseinheit zur Schaltwelle problemlos gelingt. Die Erfindung erleichtert weiterhin die Endmontage, da die Schaltbetätigungseinheit und das Schaltelement nicht notwendigerweise in einen Eingriff gebracht werden müssen, da es aufgrund der axialen Verschiebbarkeit auch möglich ist, zwischen der Schaltbetätigungseinheit und dem Schaltelement ein Spiel vorzusehen. Dadurch können Fertigungs- und/oder Montageungenauigkeiten ausgeglichen werden.

Der Grundkörper der Schaltbetätigungseinheit kann im Längsschnitt zur Getriebeachse gesehen L-förmig oder alternativ dazu ebenfalls U-förmig, also rippenartig, ausgebildet sein, da derartige Grundkörper den auftretenden Belastungen besonders gut angepasst sind. In einer weiteren Ausbildung weist der Grundkörper weitere Versteifungsrippen auf.

Es können dabei weitere Elemente wie ein Schaltarm zum Eingriff eines Schaltfingers an der Schaltbetätigungseinheit vorgesehen sein. Die Nabe und die Schaltwelle sind formschlüssig dreh- und verschiebefest miteinander verbunden, was beispielsweise durch einen Presssitz realisiert werden kann. Alternativ dazu ist die Nabe auf der Schaltwelle durch ein Linearlager gelagert.

In einer Weiterbildung der Erfindung ist der Grundkörper der Schaltbetätigungseinheit halbkreisförmig ausgebildet, wobei die gegenüberliegenden Gabelenden Führungselemente für die Druckscheibe aufweisen. Die Führungselemente können als radial nach innen weisenden Vorsprünge ausgebildet sein, vorzugsweise werden sie jedoch durch Gleitschuhe realisiert, die endseitig mit den Gabelenden verbindbar sind.

Die Gleitschuhe können aus Kunststoff bestehen und auf die Gabelenden aufgesteckt werden. Alternativ dazu werden die Gleitschuhe verclipst, geschweißt, formschlüssig mit den Enden verbunden oder auf sonstige Weise an dem Grundkörper der Schaltbetätigungseinheit befestigt. Die Anzahl der Führungselemente ist dabei nicht auf zwei beschränkt. In einer weiteren Ausführungsform der Erfindung wird der Grundkörper über weitere Führungselemente abgestützt.

Erfolgt die Verbindung zwischen dem Grundkörper und dem Außenring über zugepaarte Führungselemente, ist eine sichere Führung gewährleistet, und es gibt keine stärkeren Relativbewegungen zwischen dem Grundkörper und dem Schaltelement. Daher kann in vielen Fällen auf eine Beschichtung des Grundkörpers bzw. auf Gleitschuhe verzichtet werden. In einigen Fällen können die Gleitschuhe sogar ganz entfallen oder aus dem Material der Schaltgabel hergestellt sein, da an ihre Reibeigenschaften keine besonders hohen Anforderungen gestellt sind. Eine derartige Vereinfachung ist insbesondere für automatisierte Schaltgetriebe vorteilhaft, da die herkömmlicherweise verwendeten Gleitschuhe aus Kunststoff nicht für eine dauernde, längere Belastungsdauer ausgelegt sind, da die entstehende Reibwärme ihre Lebensdauer beeinträchtigt. Die Erfindung ermöglicht es, auf derartige Gleitschuhe aus Kunststoff zu verzichten bzw. bei der Materialwahl nicht auf die Reibeigenschaften Rücksicht nehmen zu müssen.

In besonders vorteilhafter Weise sind die Kontaktflächen zwischen dem Schaltelement und der Schaltbetätigungseinheit ballig ausgeführt. Dadurch wird einer elastischen Verformung in optimaler Weise entgegengewirkt. Je nach Auslegung der Schalteinrichtung können zusätzlich an der Schaltbetätigungseinheit gleitschuhähnliche Elemente befestigt werden, die allein der Dämpfung dienen.

Der Gegenstand der Erfindung ist besonders leicht zu fertigen, da dem Fachmann für die Auslegung vielfältige Axiallager auf dem Markt zur Verfügung stehen. Das Axiallager kann als ganzes in die Schalteinrichtung eingesetzt werden. Die Positionierung der Schaltbetätigungseinheit zu einer Druckscheibe des Axiallagers braucht erst in einem nachfolgenden Montageschritt erfolgen. Besonders einfach ist eine derartige Montage, wenn die Druckscheiben des Axiallagers als Kreisringe ausgebildet sind.

Alle Bauteile sind zudem für die Massenproduktion geeignet, da sie in ihrem Aufbau sehr einfach sind. So können die Druckscheiben aus Blech gestanzt werden, und die Schaltbetätigungseinheit kann ebenfalls aus Stahlblech hergestellt sein. Beschichtungen der Schaltbetätigungseinheit sind entbehrlich.

Auch die Verwendung einer herkömmlichen Schaltgabel in einer derartigen Schalteinrichtung ist vorgesehen. Dies ermöglicht in Großserie Kostenvorteile aufgrund von Skalierungseffekten.

Erfindungsgemäß ist es auch vorgesehen, mittels der Schaltbetätigungseinrichtung zwei Gänge zu schalten. In diesem Fall wird die Schaltbetätigungseinheit mit zwei Axiallagern zusammen, wobei die Schaltbetätigungseinrichtung zwischen einer Druckscheibe der ersten Synchronisiereinrichtung und einer Druckscheibe der zweiten Synchronisiereinrichtung angeordnet ist. Alternativ dazu wirkt die Schaltbetätigungseinrichtung über ein Zwischenbauteil auf die Axiallager bzw. direkt auf den Lagerring, z.B. wenn das Schaltelement und die Schaltbetätigungseinrichtung einteilig ausgebildet sind.

Anstelle zweier Druckscheiben kann auch eine Muffe in das Getriebe eingesetzt werden. Eine derartige Muffe unterscheidet sich jedoch von den Schiebemuffen des Standes der Technik dadurch, dass die axial nach außen gewandten Seiten der Muffe jeweils einen Teil eines Axiallagers bilden. Auch im Falle der Verwendung einer Muffe kann somit auf Gleitschuhe an der Schaltbetätigungseinheit verzichtet werden.

Die Muffe kann spanend oder als gebogene Dünnblechkonstruktion ausgeführt sein. Sie weist in einer Variante eine nach außen gerichtete umlaufende Nut auf, die optional beschichtet sein kann. Die Muffe kann in Bezug auf die Schaltbetätigungseinheit rotieren. Aus den vorstehend beschriebenen reibungstechnischen Gründen ist es allerdings vorteilhaft wenn die Muffe in Bezug auf Schaltbetätigungseinheit drehfest angeordnet ist.

Die Nut der Muffe eignet sich für den Eingriff von drehbaren Gleitschuhen, was die Möglichkeit eröffnet, eine Schaltschwinge als Schaltbetätigungseinheit zu verwenden. Allerdings ist die Muffe nicht zwingende Voraussetzung für den Einsatz der Schaltschwinge, so können derartige Schaltschwingen auch mit ringförmigen Druckscheiben zusammenwirken.

In einer Weiterbildung der Erfindung weist das Schaltelement als Druckscheibe ein oder mehrere Ansätze zum Eingriff der Schaltbetätigungseinheit auf. Die Druckscheibe ist vorzugsweise kreisringförmig ausgeführt, und die Ansätze können als nach außen abstehende Nasen ausgebildet sein. Die zugehörige Schaltbetätigungseinheit besteht aus dickerem Blech und ist in etwa U-förmig gebogen. An ihren Enden weist sie etwa mittig Aussparungen auf, die seitlich von jeweils zwei Gabelschenkeln eingefasst sind.

Bei der Montage wird die Schaltbetätigungseinheit mit den Ausnehmungen auf die Nasen der Druckscheibe geschoben. Sofern ausreichend Bauraum vorhanden ist, kann der Außendurchmesser der Schaltbetätigungseinheit sich zur Mitte hin vergrößern, und ihr gabelförmiger Grundkörper kann direkt auf die Nasen geschoben werden. Auch hier ist es vorteilhaft, die Aussparungen in dem Grundkörper ballig zu gestalten.

Um die Montage weiter zu erleichtern, ist optional eine Unwucht an der Druckscheibe vorgesehen, die zu einer Vorausrichtung auf dem Radsatz genutzt werden kann. Alternativ dazu werden die Nasen zu einer derartigen Vorausrichtung herangezogen. In einer Weiterbildung dieser Ausführung sind die Gabelschenkel der Schaltbetätigungseinheit ebenfalls jeweils mit Gleitschuhen versehen. Die Gleitschuhe brauchen dabei nicht notwendigerweise gute Reibeigenschaften aufweisen. Es ist ebenfalls vorgesehen, diese lediglich als Toleranzausgleich zu verwenden. Dies ermöglicht eine größere Auswahl an Gleitschuhen, wobei die Materialwahl allein im Hinblick auf die Lebensdauer der Schalteinrichtung erfolgen kann.

Eine derartige Schalteinrichtung ist direkt auf der Getriebewelle montierbar. Sie kann besonders leicht ausgerichtet werden, wenn die Schaltelemente rotationssymmetrisch ausgebildet sind. Dadurch kann aufgrund der Symmetrie eine winkelgenaue Ausrichtung entfallen. Ebenso kann das Axiallager in einfacher Weise mit den anderen Synchronisationsbauteilen auf der Getriebewelle vormontiert werden und die Schaltbetätigungseinheit zusammen mit der Schaltwelle in einem separaten Montagegang vormontiert werden und erst in einem letzten Schritt werden Schaltbetätigungseinheit und die Synchronisiereinrichtung zueinander ausgerichtet.

Der erfindungsgemäße Schalteinheit stellt somit einen Betätigungsmechanismus für eine Synchronisiereinrichtung bereit, über die in axialer Richtung auch über eine längere Zeitdauer eine Kraft eingeleitet werden kann, ohne übermäßig zu verschleißen.

### Kurze Beschreibung der Zeichnungen

Die Erfindung ist nachfolgen anhand von Ausführungsbeispielen näher erläutert. Es zeigen:
- Figur 1: eine Explosionsdarstellung einer Synchronisiereinrichtung ohne die Getriebewelle,
- Figur 2: eine vergrößerte Darstellung der zusammengebauten Synchroni- siereinrichtung nach Figur 1 mit einer Schaltbetätigungseinheit als eine erfindungsgemäße Schalteinheit,
- Figur 3: eine Explosionsdarstellung der Schalteinheit nach Figur 2,
- Figur 4: eine erfindungsgemäße Schalteinheit mit einer Schaltgabel ge- mäß dem Stand der Technik,
- Figur 5: die Schalteinheit nach Figur 4 in Explosionsdarstellung,
- Figur 6: eine weitere erfindungsgemäße Schalteinheit mit einer Muffe,
- Figur 7: die Schalteinheit nach Figur 6 in einer Explosionsdarstellung,
- Figur 8: eine zweite erfindungsgemäße Schalteinheit mit einer Muffe und einer Schaltschwinge,
- Figur 9: die Schalteinheit nach Figur 8 in Explosionsdarstellung,
- Figur 10: eine weitere erfindungsgemäße Schalteinheit mit einer Schalt- schwinge,
- Figur 11: Schalteinheit nach Figur 10 in Explosionsdarstellung,
- Figur 12: eine erfindungsgemäße Schalteinheit mit einer Druckscheibe, welche Nasen aufweist,
- Figur 13: die Schalteinheit nach Figur 12 in Explosionsdarstellung,
- Figur 14: die Schalteinheit nach Figur 12 mit Gleitschuhen,
- Figur 15: die Schalteinheit nach Figur 14 in Explosionsdarstellung.

### Detaillierte Beschreibung der Zeichnungen

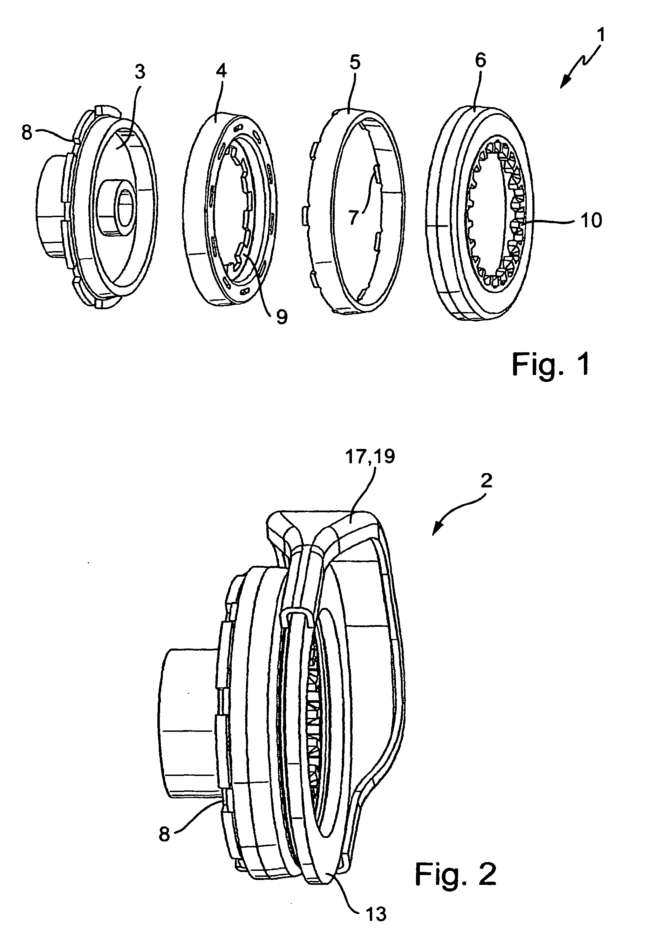

Figur 1 zeigt eine Synchronisiereinrichtung 1 als Teil einer Schalteinrichtung 2 (Figur 2) eines Gangräderwechselgetriebes. Die einzelnen Bauteile sind koaxial um die nicht dargestellte Getriebewelle angeordnet. Ebenfalls nicht dargestellt ist das Losrad, mit dem der Konus 3 radial und axial fest verbunden ist. Axial versetzt vom Konus 3 sind ein Innenring 4, ein Zwischenring 5 und ein Außenring 6 angeordnet. Dabei ist der Zwischenring 5 mit Zapfen 7 versehen, welche in Konusaussparungen 8 eingreifen. Der Innenring 4 und der Außenring 6 sind über Innenverzahnungen 9, 10 axial verschiebbar auf einer nicht dargestellten Synchronisationsnabe oder mit der Getriebewelle radial fixiert. Wird in dieses System auf den Außenring 6 ein axialer Druck eingebracht, so entsteht ein Reibschluss, sodass der Konus 3 die gleiche Drehzahl annimmt wie der Innenring 4 und der Außenring 6.

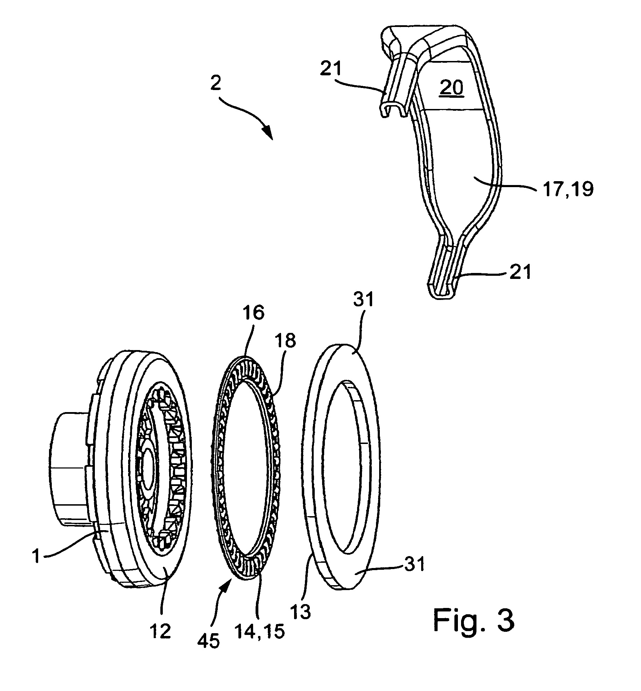

Mit dem erfindungsgemäßen Betätigungsmechanismus für die Synchronisiereinrichtung 1 kann über eine längere Zeitdauer auf den Außenring 6 eine axiale Kraft eingeleitet werden. In der Ausführungsform nach den Figuren 2 und 3 schließt sich an den Außenring 6 ein Axiallager 11 an, das eine erste Lauffläche 12, einen Lagerring 45 und eine zweite Lauffläche 13 aufweist. Der Lagerring 45 weist einen Käfig 16 mit Taschen 18 auf, die Wälzkörper 14 aufnehmen, die als Nadeln 15 ausgebildet sind. Die erste Lauffläche 13 ist am Außenring 6 ausgebildet, und die zweite Lauffläche 13 ist als Druckscheibe 30 ausgebildet, welche mit einem Schaltbetätigungselement 17 im Eingriff steht. Die Druckscheibe 13 ist als ein relativ dünner Kreisring aus Stahlblech ausgebildet.

Das Schaltbetätigungselement 17 ist eine in etwa U-förmige Schaltgabel 19, die aus profiliertem Blechmaterial hergestellt ist. Sie weist einen relativ breiten Zentralbereich 20 auf, sodass die eingeleiteten Schaltkräfte sicher aufgenommen werden können und verjüngt sich an ihren jeweils gegenüberliegenden Enden 21. Die Enden 21 weisen zwei gegenüberliegende Gabelschenkel 22, 23 auf, mit welchen die zweite Druckscheibe 13 sicher geführt werden kann. Die Gabelschenkel 22, 23 bilden dabei Kontaktflächen und sind ballig ausgeführt, um einer möglichen elastischen Verformung vorzubeugen. Nicht dargestellt sind beispielsweise als Schuhe ausgebildete Führungselemente 29, mit welchen die Enden 21 der Schaltgabel 19 zur Dämpfung versehen sein können.

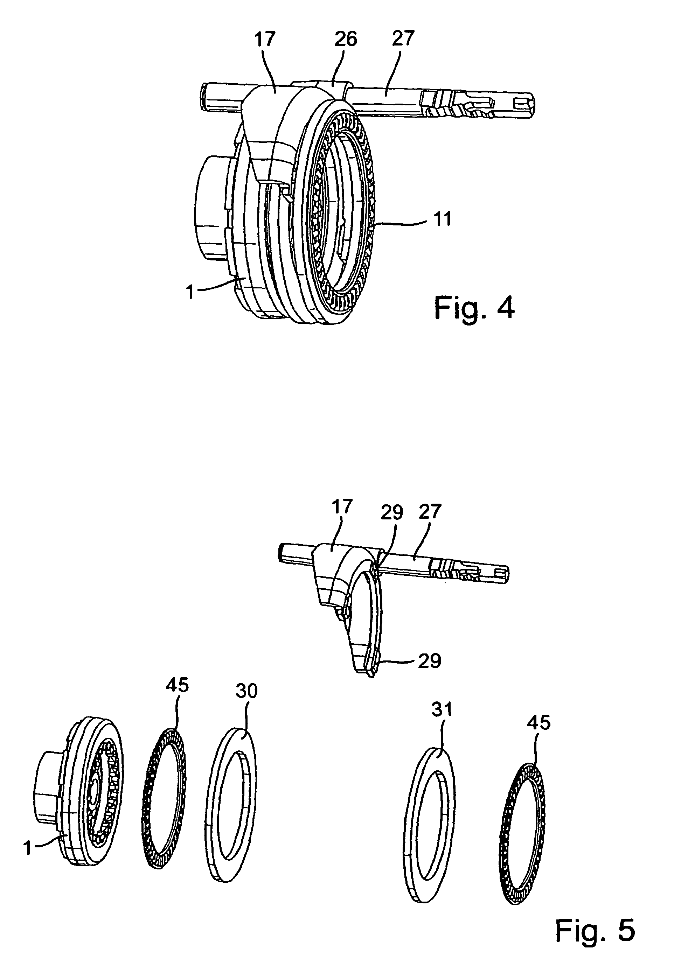

Die Figuren 4 und 5 zeigen eine Schalteinrichtung 2 mit einer Schaltgabel 19 gemäß dem Stand der Technik. Zur besseren Übersicht entfallen die zweite Druckscheibe mit dem nachgeschalteten Außenring, dem Zwischenring, dem Innenring und dem Konus des einen zu schaltenden Losrads. Die Schaltgabel 19 weist einen im Querschnitt in etwa L-förmig geformten Grundkörper 25 und eine Nabe 26 auf, wobei die Schaltgabel 19 mit der Nabe 26 an einer Schaltwelle 27 befestigt ist. Der halbkreisförmige Grundkörper 25 weist an seinen Enden 21 sowie im dazwischen liegenden Zentralbereich 20 Führungselemente 29 auf, über welche er mit Druckscheiben 30, 31 in Wirkverbindung steht. In Umfangsrichtung sind zwischen den Führungselementen 29 Freiräume 32 in Form eines Spalts angeordnet. Die Führungselemente 29 können als Gleitschuhe 39 aus Kunststoff ausgebildet sein.

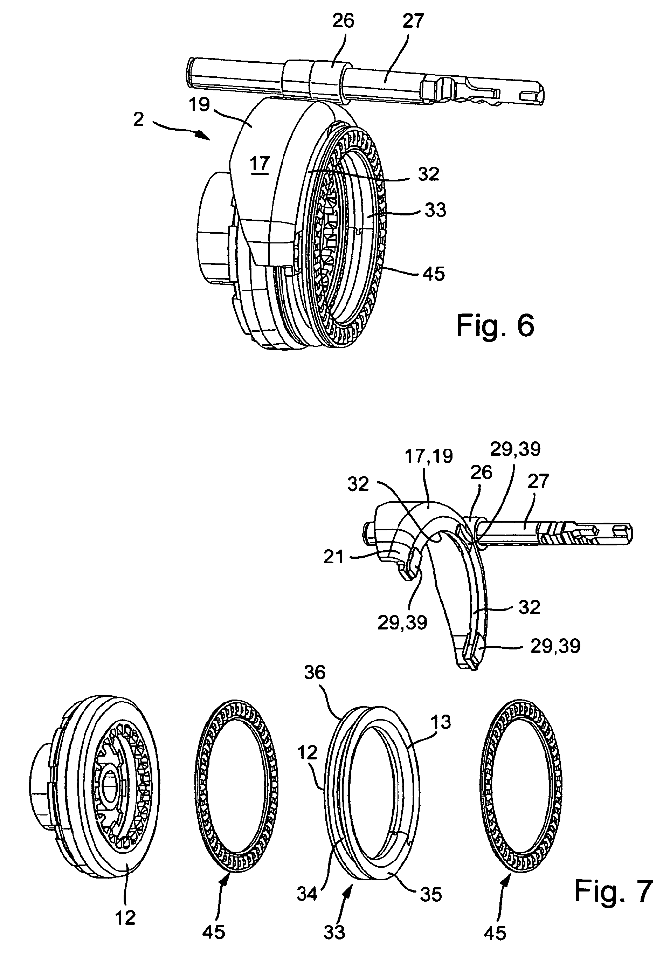

In der Schalteinrichtung 2 gemäß den Figuren 6 und 7 sind zwei Axiallager 11, 24 angeordnet, wobei die jeweils zueinander gewandten Druckscheiben 30 und 31 miteinander zu einer Muffe 33 verbunden sind. Die Muffe 33 weist außenseitig eine Nut 34 zum Eingriff einer Schaltbetätigungseinheit 17 auf. Die Muffe 33 ist ein kreisringförmiges Bauteil das aus einem abgelängten Blech hergestellt ist, dessen Enden gebogen und miteinander verbunden sind. Die nach außen gerichteten Wandungen 35, 36 begrenzen nach innen gerichtet die hier als Ringnut ausgebildete Nut 34 und bilden außenseitig die Laufflächen 12, 13 für die Wälzkörper 14 des jeweiligen Axiallagers 11, 24.

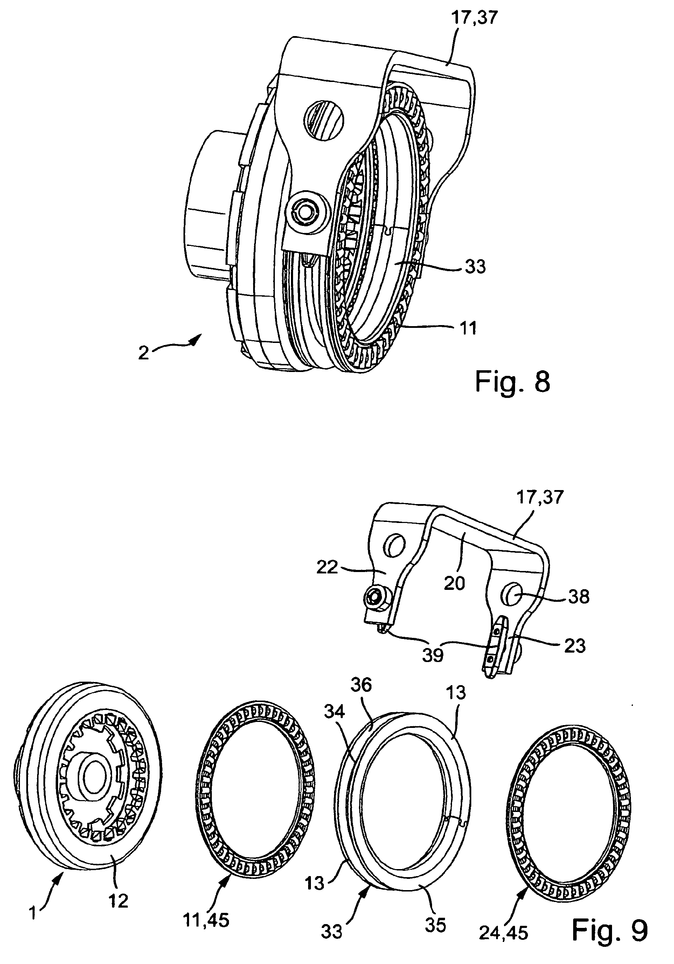

Figur 8 und 9 zeigen eine erfindungsgemäße Schalteinrichtung 2, bei der die Schaltbetätigungseinheit 17 als Schaltschwinge 37 ausgebildet ist. Die Schaltschwinge 37 weist ein gewinkeltes Profil auf, wobei zwei sich gegenüberliegende Gabelschenkel 22, 23 durch einen Zentralbereich 20 verbunden sind. Die Gabelschenkel 22, 23 weisen Ausnehmungen 38 auf, in welche drehbare Gleitschuhe 39 bzw. Führungselemente 29 eingesetzt werden können. Weitere Ausnehmungen 38 können dazu vorgesehen sein, die Masse der Schaltschwinge 37 zu verringern.

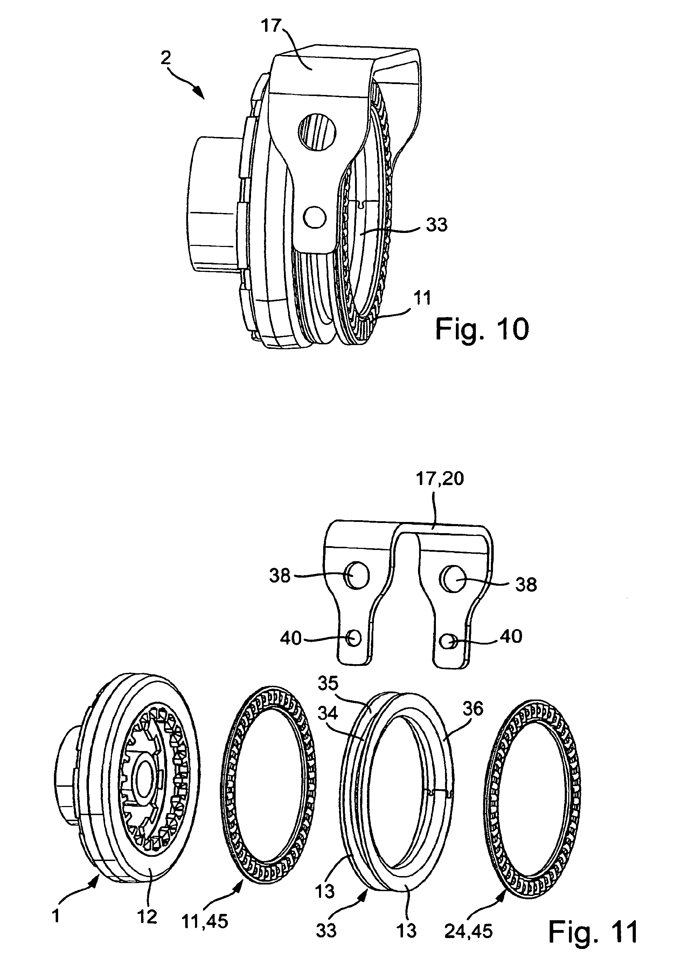

Die Schaltschwinge 37 nach den Figuren 10 bzw. 11 weist anstelle von Gleitschuhen Durchstellungen 40 auf, welche gegebenenfalls beschichtet sind. Die Durchstellungen 40 sind ballig ausgeführt, können aber dem Herstellungsverfahren der Schaltschwinge 37 angepasst sein. Mit den Durchstellungen 40 greift die Schaltschwinge 37 in die Nut 34 der Muffe 33 ein. Sind die Durchstellungen 40 nicht rund ausgebildet, so kann eine derartige Schaltbetätigungseinheit 17 dennoch als Schaltgabel 19 verwendet werden.

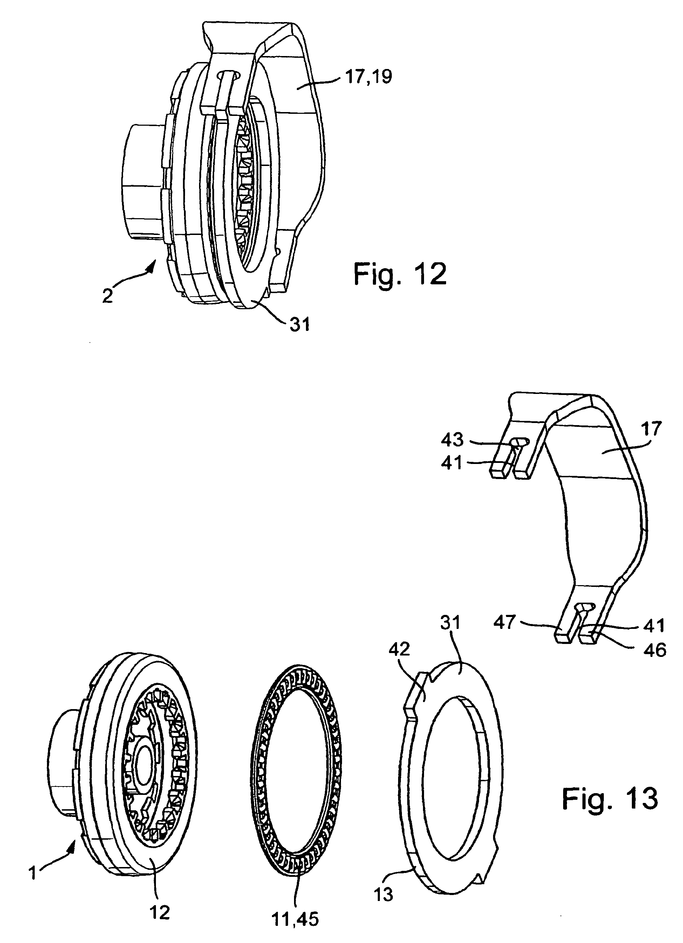

Die Figuren 12 und 13 zeigen eine Schaltbetätigungseinheit 17 mit einem Grundkörper 25, dessen Enden 21 Aussparungen 41 aufweisen, wobei die Aussparungen 41 zum Eingriff mit an einer Druckscheibe 30 angeordneten Nasen 42 vorgesehen sind. Die Aussparungen 41 sind in etwa mittig angeordnet, so dass sich zwei endseitige Schenkel 46, 47 axial gegenüberstehen. In einer Weiterbildung weisen die Aussparungen 41 Hinterschnitte 43 auf, in welche die Nasen 42 optional verschnappbar sind. Die Nasen 42 sind an einer Druckscheibe 30 angeordnet, wobei sie einteilig mit dieser ausgebildet sind. Die Druckscheibe 30 ist kreiszylindrisch ausgebildet und die Nasen 42 sind nach radial außen orientiert und sind etwa um 180° versetz angeordnet. Die Schenkel 46, 47 sind ballig gestaltet, um die auftretenden Spannungen möglichst günstig aufzunehmen.

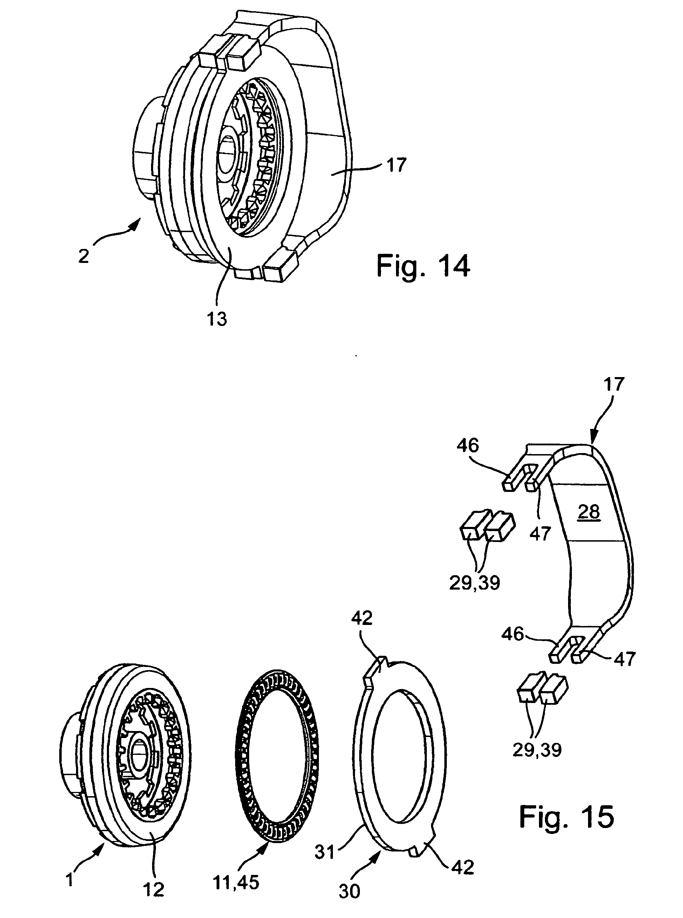

In der Weiterbildung gemäß den Figuren 14 und 15 sind die Schenkel 46, 47 mit Führungselementen 29 bzw. Gleitschuhen 39 versehen. Diese können als Toleranzausgleich vorgesehen sein. Alternativ dazu können die Gleitschuhe auch an den Nasen 42 anstatt an den Schenkeln 46, 47 angeordnet sein.

### Bezugszeichenliste

- 1: Synchronisiereinrichtung
- 2: Schalteinrichtung
- 3: Konus
- 4: Innenring
- 5: Zwischenring
- 6: Außenring
- 7: Zapfen
- 8: Konusaussparung
- 9: Innenverzahnung
- 10: Innenverzahnung
- 11: Axiallager
- 12: erste Lauffläche
- 13: zweite Lauffläche
- 14: Wälzkörper
- 15: Nadeln
- 16: Käfig
- 17: Schaltbetätigungseinheit
- 18: Taschen
- 19: Schaltgabel
- 20: Zentralbereich
- 21: Enden
- 22: Gabelschenkel
- 23: Gabelschenkel
- 24: Axiallager
- 25: Grundkörper
- 26: Nabe
- 27: Schaltwelle
- 28: (nicht belegt)
- 29: Führungselement
- 30: Druckscheibe
- 31: Druckscheibe
- 32: Freiraum
- 33: Muffe
- 34: Nut
- 35: Wandung
- 36: Wandung
- 37: Schaltschwinge
- 38: Ausnehmung
- 39: Gleitschuhe
- 40: Durchstellung
- 41: Aussparung
- 42: Nase
- 43: Hinterschnitt
- 44: Schaltelement
- 45: Lagerring
- 46: Schenkel
- 47: Schenkel

## Patentansprüche

1. Schalteinrichtung (2) eines Gangräderwechselgetriebes mit einem Schaltelement (44), das durch eine Schaltbetätigungseinheit (17) axial zu einer Getriebewelle verschiebbar ist, und mit einer Synchronisiereinrichtung (1) , die zwischen einem auf der Getriebewelle gelagerten Losrad und dem Schaltelement (44) angeordnet ist, **dadurch gekennzeichnet, dass** zwischen dem Schaltelement (44) und der Synchronisiereinrichtung (1) ein Axiallager (11) angeordnet ist.

2. Schalteinrichtung nach Anspruch 1, **dadurch gekennzeichnet, dass** das Schaltelement (44) als Druckscheibe (13, 30, 31) des Axiallagers (11) ausgebildet ist.

3. Schalteinrichtung nach Anspruch 2, **dadurch gekennzeichnet, dass** die Druckscheibe (13, 30, 31) in Bezug auf die Schaltbetätigungseinheit (17) rotationsfest angeordnet ist.

4. Schalteinrichtung nach Anspruch 3, **dadurch gekennzeichnet, dass** die Schaltbetätigungseinheit (17) und das Schaltelement (44) drehfest miteinander verbunden oder einteilig ausgebildet sind.

5. Schalteinrichtung nach Anspruch 1, **dadurch gekennzeichnet, dass** das Axiallager (11) einen Lagerring (45) aufweist, der aus einem Käfig (16) mit Taschen (18) ausgebildet ist, wobei in den Taschen (18) Wälzkörper (14) angeordnet sind.

6. Schalteinrichtung nach Anspruch 1, **dadurch gekennzeichnet, dass** das Axiallager (11) vorgespannt ist.

7. Schalteinrichtung nach Anspruch 1, **dadurch gekennzeichnet, dass** das Schaltelement (44) als Muffe (33) ausgebildet ist, wobei die Muffe (33) eine nach außen gerichtete Nut (34) zum Eingriff der Schaltbetätigungseinheit (17) aufweist, wobei die die Nut (34) axial begrenzenden Wandungen (35, 36) jeweils eine Druckscheibe (30, 31) jeweils eines Axiallagers (11, 24) bilden.

8. Schalteinrichtung nach Anspruch 1, **dadurch gekennzeichnet, dass** die Schaltbetätigungseinheit (17) als eine Schaltschwinge (37) ausgebildet ist.

9. Schalteinrichtung nach Anspruch 1, **dadurch gekennzeichnet, dass** die Schaltbetätigungseinheit (17) als eine Schaltgabel (19) ausgebildet ist.

10. Synchronisationseinrichtung nach Anspruch 1, **dadurch gekennzeichnet**, die Schaltbetätigungseinheit (17) Gleitschuhe (39) aufweist.

11. Schaltelement für eine Synchronisationseinrichtung nach Anspruch 1.

12. Schaltgabel für eine Schalteinrichtung nach Anspruch 1.

13. Schalteinrichtung nach Anspruch 1, **dadurch gekennzeichnet, dass** das Schaltelement (44) zwei Nasen (42) zum Eingriff der Schaltbetätigungseinheit (17) aufweist.

14. Schalteinrichtung nach Anspruch 13, **dadurch gekennzeichnet, dass** die Schaltbetätigungseinheit (17) endseitig Aussparungen (41) zum Eingriff in das Schaltelement (44) aufweist, wobei die Aussparungen (41) außenseitig von Schenkeln (46, 47) begrenzt sind.

15. Schalteinrichtung nach Anspruch 13, **dadurch gekennzeichnet, dass** die Schenkel (46, 47) mit Gleitschuhen (39) versehen sind.

## Claims

1. Shift device (2) of a variable-speed gearwheel transmission having a shift element (44) which can be moved axially with respect to a transmission shaft by a shift actuation unit (17), and having a synchronizing device (1) which is arranged between a loose wheel, which is mounted on the transmission shaft, and the shift element (44), **characterized in that** an axial bearing (11) is arranged between the shift element (44) and the synchronizing device (1).

2. Shift device according to Claim 1, **characterized in that** the shift element (44) is designed as a pressure disc (13, 30, 31) of the axial bearing (11).

3. Shift device according to Claim 2, **characterized in that** the pressure disc (13, 30, 31) is arranged so as to be rotationally fixed in relation to the shift actuation unit (17).

4. Shift device according to Claim 3, **characterized in that** the shift actuation unit (17) and the shift element (44) are rotationally fixedly connected to one another or are formed in one piece.

5. Shift device according to Claim 1, **characterized in that** the axial bearing (11) has a bearing ring (45) which is formed from a cage (16) with pockets (18), rolling bodies (14) being arranged in the pockets (18).

6. Shift device according to Claim 1, **characterized in that** the axial bearing (11) is preloaded.

7. Shift device according to Claim 1, **characterized in that** the shift element (44) is designed as a sleeve (33), the sleeve (33) having an outwardly directed groove (34) for the engagement of the shift actuation unit (17), the walls (35, 36) which axially delimit the groove (34) forming in each case one pressure disc (30, 31) of in each case one axial bearing (11, 24).

8. Shift device according to Claim 1, **characterized in that** the shift actuation unit (17) is designed as a shift rocker (37).

9. Shift device according to Claim 1, **characterized in that** the shift actuation unit (17) is designed as a shift fork (19).

10. Shift device according to Claim 1, **characterized in that** the shift actuation unit (17) has sliding blocks (39).

11. Shift element for a shift device according to Claim 1.

12. Shift fork for a shift device according to Claim 1.

13. Shift device according to Claim 1, **characterized in that** the shift element (44) has two lugs (42) for the engagement of the shift actuation unit (17).

14. Shift device according to Claim 13, **characterized in that** the shift actuation unit (17) has cutouts (41) on the end side for engagement into the shift element (44), the cutouts (41) being delimited at the outside by limbs (46, 47).

15. Shift device according to Claim 13, **characterized in that** the limbs (46, 47) are provided with sliding blocks (39).

## Revendications

1. Dispositif de changement de vitesse (2) d'une boîte de vitesses comprenant un élément de changement de vitesse (44), qui peut être déplacé axialement à un arbre de boîte de vitesses au moyen d'une unité de commande de changement de vitesse (17), et comprenant un dispositif de synchronisation (1), qui est disposé entre une roue folle montée sur l'arbre de boîte de vitesses et l'élément de changement de vitesse (44), **caractérisé en ce qu'**un palier axial (11) est disposé entre l'élément de changement de vitesse (44) et le dispositif de synchronisation (1).

2. Dispositif de changement de vitesse selon la revendication 1, **caractérisé en ce que** l'élément de changement de vitesse (44) se présente sous la forme d'une rondelle de pression (13, 30, 31) du palier axial (11).

3. Dispositif de changement de vitesse selon la revendication 2, **caractérisé en ce que** la rondelle de pression (13, 30, 31) est disposée de façon solidaire en rotation par rapport à l'unité de commande de changement de vitesse (17).

4. Dispositif de changement de vitesse selon la revendication 3, **caractérisé en ce que** l'unité de commande de changement de vitesse (17) et l'élément de changement de vitesse (44) sont assemblés l'un à l'autre de façon solidaire en rotation ou sont réalisés d'une seule pièce.

5. Dispositif de changement de vitesse selon la revendication 1, **caractérisé en ce que** le palier axial (11) présente une bague de palier (45), qui est formée d'une cage (16) avec des alvéoles (18), dans lequel des corps de roulement (14) sont disposés dans les alvéoles (18).

6. Dispositif de changement de vitesse selon la revendication 1, **caractérisé en ce que** le palier axial (11) est précontraint.

7. Dispositif de changement de vitesse selon la revendication 1, **caractérisé en ce que** l'élément de changement de vitesse (44) se présente sous la forme d'un manchon (33), dans lequel le manchon (33) présente une rainure (34) orientée vers l'extérieur pour l'engagement de l'unité de commande de changement de vitesse (17), dans lequel les parois (35, 36) limitant axialement la rainure (34) forment respectivement une rondelle de pression (30, 31) d'un palier axial respectif (11, 24).

8. Dispositif de changement de vitesse selon la revendication 1, **caractérisé en ce que** l'unité de commande de changement de vitesse (17) se présente sous la forme d'une bielle oscillante de changement de vitesse (37).

9. Dispositif de changement de vitesse selon la revendication 1, **caractérisé en ce que** l'unité de commande de changement de vitesse (17) se présente sous la forme d'une fourchette de changement de vitesse (19).

10. Dispositif de changement de vitesse selon la revendication 2, **caractérisé en ce que** l'unité de commande de changement de vitesse (17) présente des patins de guidage (39).

11. Elément de changement de vitesse pour un dispositif de changement de vitesse selon la revendication 1.

12. Fourchette de changement de vitesse pour un dispositif de changement de vitesse selon la revendication 1.

13. Dispositif de changement de vitesse selon la revendication 1, **caractérisé en ce que** l'élément de changement de vitesse (44) présente deux ergots (42) pour l'engagement de l'unité de commande de changement de vitesse (17).

14. Dispositif de changement de vitesse selon la revendication 13, **caractérisé en ce que** l'unité de commande de changement de vitesse (17) présente aux extrémités des découpes (41) pour l'engagement dans l'élément de changement de vitesse (44), dans lequel les découpes (41) sont limitées extérieurement par des branches (46, 47).

15. Dispositif de changement de vitesse selon la revendication 13, **caractérisé en ce que** les branches (46, 47) sont dotées de patins de guidage (39).
